# EUROPEAN PATENT SPECIFICATION

(11) **EP 2 277 841 B1**
(45) Date of publication and mention of the grant of the patent: **14.05.2014**
(21) Application number: 08874350.5
(22) Date of filing: 24.10.2008
(51) Int. Cl.: C04B 28/02

(54) **A SELF REPAIRING CONCRETE CONTAINING MICROCAPSULES OF POLYURETHANE AND PRODUCING METHOD THEREOF**
SELBSTREPARIERENDER BETON ENTHALTEND POLYURETHANMIKROKAPSELN UND HERSTELLUNGSVERFAHREN DAFÜR
BÉTON AUTORÉPARABLE COMPRENANT DES MICROCAPSULES DE POLYURÉTHANNE ET SON PROCÉDÉ DE FABRICATION

(30) Priority: 20.05.2008 CN 200810067314
(43) Date of publication of application: 26.01.2011
(73) Proprietor: Shenzhen University, Guangdong 518060 (CN); Xing, Feng, Guangdong 518060 (CN); Ni, Zhuo, Guangdong 518060 (CN)
(72) Inventor: XING, Feng, Guangdong 518060 (CN); NI, Zhuo, Guangdong 518060 (CN)
(74) Representative: Vossius & Partner
(86) International application number: PCT/CN2008/072832
(87) International publication number: WO 2009/140835

(56) References cited:
- WO-A1-2006/018130
- CN-A- 1 736 575
- CN-A- 1 903 775
- CN-A- 101 289 298
- DE-A1- 2 557 407
- JP-A- 3 267 437
- JP-A- 10 194 801
- JP-A- 2006 321 685
- US-A- 4 047 967
- US-A1- 2008 047 472

## Description

The present invention relates to a self-repairing concrete having polyurethane polymer micro-capsules and a method for fabricating such concrete.

### GENERAL BACKGROUND

As a representative of the traditional building materials, concrete has its inherent advantages of compressive strength, high durability and low cost, therefore being widely used in industrial and civil buildings, bridges, road works, underground works, water conservancy and hydropower projects, nuclear power plants, ports and ocean engineering structures. Currently, the concrete is used in the large-span structures, high-rise structures, mega-structure and the special structure as the most widely applied material that has more than 100 years of history. In the foreseeable future, the concrete is still an indispensable building material in the country's modernization construction. In-service concrete structures due to the use of long-term process and under the influence of the surrounding complex environment, will inevitably produce micro-cracking and local damage. Those defects usually would reduce the life of the structure, cause re-structure, even threaten safety. Therefore, the structural repair of cracks in concrete is a long-troubled technical problem to civil engineers. Researches on raw materials, mixing ratio, additives, manufacturing processes, casting processes do not fundamentally change the performance of weaknesses of the concrete. Therefore, to repair the crack of the concrete in service timely and effectively has become a major concern of scientists and engineers. Due to damage caused by macro such as earthquakes, wind loads, shock, you can visually detect and fix it manually, using traditional methods (program repair and post-restoration) on the crack repair. In the actual structure of concrete works, there are many small cracks, such as micro-cracking of base body and so on, and this micro-scale damage may be undetectable due to the limitations of detection technology. Therefore, it becomes very difficult to repair these undetectable cracks and damage, if not impossible. If the cracks or damage can not be timely and effectively restored, the structure will not only affect the normal use of the performance and shorten the life, but also macro-cracks may be triggered and lead to structural brittle fracture, resulting in serious catastrophic accidents. There is an urgent need to adopt a certain technology or method that can initiatively and automatically repair and restore the cracks and damage, or even can increase the strength of concrete materials in order to achieve a purpose of extending the service life of concrete structures. Conventional concrete and method for fabricating concrete cannot provide a solution to the problem of self-diagnosis and self-repair of micro-cracks.

The self-repair of the concrete is conducted by adding special components (such like shape memory alloy) to form an intelligent self-repair system that can be automatically triggered to fix the damage or cracks of the concrete material.

Currently, researches about self-repairing concrete structures are concentrated in the hollow fiber restoration techniques. Although it is still in the laboratory stage, the hollow fiber capsules prove the function of the self-repairing concrete. However, the construction process of concrete causes vibrations, etc., which disturb the arrangement of hollow fiber capsule design, and even lead to rupture of the glass wall material, namely the premature loss of restorative, which is unable to attain the purpose of repairing concrete and affect the feasibility of self-repairing process of the concrete and the repeatability of self-repairing capacity of the concrete. During a process of oxidation and use, micro-cracks and cracks in concrete structures appeared in large numbers randomly. Self-repairing technique requires the repair capsules evenly distributed in the concrete structure. Because the hollow fiber material has restrictions due to the brittle characteristic, the hollow fiber capsules can not ensure micro-capsule material in concrete in the even distribution, so that the fiber capsule of the micro-cracks in self-repairing process of the concrete structure can only adopt special concrete materials and special technique. These difficulties limit the hollow fiber capsules in repair cracks in the concrete structure effectively. Surface properties, wall material strength, geometry parameters and content of hollow fiber capsule have significant impacts on the repair of concrete results. Fibrous capsule wall material is smooth and in lower bond strength of concrete that make concrete hard to form an effective phase interface. Hollow fiber capsule has larger size, sometimes up to millimeters in diameter and can be considered that fixed agents are introduced as well as defects, inevitably, in the concrete structure, which will reduce the concrete's own strength and self-repairing efficiency. Hollow fiber capsule wall material has a large strength of glass, thus stress generated by the micro-cracks of the concrete may be difficult to provide enough energy to the make hollow fiber capsule rupture, and this technology may only fix large cracks while in critical factor of damages of the concrete structure, micro-crack, may be very limited for the micro-crack to be self-repairing. This shows that the method still has many problems to be solved in engineering applications, including durability of the fibrous capsule, timeliness of repairing, interface compatibility, reliability, and feasibility of restoration and other issues in engineering applications. It is obvious that early repair of micro-cracks is significant and essential for the durability of concrete structures, so that the use of hollow fiber micro-capsule technology does not fit micro-cracks repairing for reasons including the above-mentioned limitations.

What is needed, therefore, is a self-repairing concrete having polyurethane polymer micro-capsules. What is also needed is a method for fabricating such concrete.

United States Patent Application US 2008/047472 discloses an article comprising a cured composite matrix material having a modifying agent therein, wherein the modifying agent is capable of beneficially modifying the composite matrix material in response to a stimulus, wherein modifying agent is in a vessel.

Japanese Patent Application JP H-10194801 relates to a concrete repairing liquid-encapsulated aggregate and concrete blended with the same.

### SUMMARY

It is an object of the present invention to provide a self-repairing concrete having polyurethane polymer micro-capsules that can effectively achieve self-repairing of the micro cracks of the concrete.

The present invention provides the following items 1 to 3:
1. A self-repairing concrete comprising:
   concrete, micro-capsules and water being mixed together, wherein the micro-capsules comprise a capsule wall and an adhesive material of a capsule core, the capsule wall being made from polyurethane polymer
   wherein a mass ratio of the concrete is: concrete / micro-capsules / water = 100 : 1-15 : 15-50,
   wherein the adhesive is a single-component adhesive selected from the group consisting of single-component polyurethane adhesives, silicone anaerobic adhesives, acrylic adhesives and neoprene adhesives, or is a multi-component epoxy adhesive,
   wherein the polymer material of the capsule wall and the adhesive material of the capsule core of the micro-capsule has a mass ratio of 100 : 40-80,
   wherein the micro-capsules are ball-shaped with a diameter of 10-500 microns, and
   wherein the thickness of said capsule wall is 1-10 microns.
2. A method for fabricating a self-repairing concrete, comprising the steps of:
   (1) mixing enough water with a proper portion of micro-capsules until said micro-capsules are fully dispersed into said water,
      wherein said micro-capsules comprise a capsule wall and adhesive material of a capsule core, said capsule wall being made from polyurethane polymer, wherein a mass ratio of the concrete is: concrete / micro-capsules / water = 100 : 1-15 : 15 -50,
      wherein the adhesive is a single-component adhesive selected from the group consisting of single-component polyurethane adhesives, silicone anaerobic adhesives, acrylic adhesives and neoprene adhesives, or is a multi-component epoxy adhesive,
      wherein the polymer material of the capsule wall and the adhesive material of the capsule core of the micro-capsule has a mass ratio of 100 : 40-80, wherein the micro-capsules are ball-shaped with a diameter of 10-500 microns, and
      wherein the thickness of said capsule wall is 1-10 microns;
   (2) placing a mixture of said water and said micro-capsules in a mixing container and adding a corresponding dose of cement into said mixture;
   (3) slowly stirring said mixture with cement and then faster stirring said mixture with cement to form a concrete slurry; and
   (4) gradually adding said concrete slurry into a mixing container and vibrating said concrete slurry to remove bubbles in said concrete slurry in said mixing container to form said self-repairing concrete, wherein said concrete slurry is added into said mixing container in parts that 1/3 of said concrete slurry is added into said mixing container at each time until all of said concrete slurry is filled in said mixing container.
3. A method for fabricating a self-repairing concrete, comprising the steps of:
   (1) mixing enough water with a proper portion of micro-capsules until said micro-capsules are fully dispersed into said water,
      wherein said micro-capsules comprise a capsule wall and adhesive material of the capsule core, said capsule wall being made from polyurethane polymer, wherein a mass ratio of the concrete is: concrete / micro-capsules / water = 100 : 1-15 : 15 -50,
      wherein the adhesive is a single-component adhesive selected from the group consisting of single-component polyurethane adhesives, silicone anaerobic adhesives, acrylic adhesives and neoprene adhesives, or is a multi-component epoxy adhesive,
      wherein the polymer material of the capsule wall and the adhesive material of the capsule core of the micro-capsule has a mass ratio of 100 : 40-80, wherein said micro-capsules are ball-shaped with a diameter of 10-500 microns, and
      wherein the thickness of said capsule wall is 1-10 microns;
   (2) placing a mixture of said water and said micro-capsules in a mixing container and adding a corresponding dose of cement into said mixture;
   (3) slowly stirring said mixture with cement and then faster stirring said mixture with cement to form a concrete slurry;
   (4) vibrating said concrete slurry to remove bubbles in said concrete slurry and forming said concrete slurry into work pieces in molds;
   (5) placing said work pieces aside for 1-2 hours, scraping excessive of said concrete slurry in said molds, and then placing said work pieces for another 21-26 hours; and
   (6) removing said work pieces from said molds and placing said work pieces in a concrete conservation container for 25-31 days to form said self-repairing concrete.

The adhesive is single component, comprising: single-component polyurethane adhesive, silicone anaerobic adhesives, acrylic adhesives and neoprene adhesives, etc., or a multi-component epoxy adhesive, the adhesive being of good liquidity and adhesive strength.

According to an exemplary embodiment of the present invention, the multi-component epoxy adhesive consists of one or more of bisphenol A type epoxy resin, bisphenol F type epoxy resin, bisphenol S type epoxy resin, resorcinol-type epoxy resin, silicone modified bisphenol A type epoxy resin or organic titanium modified bisphenol A type epoxy resin.

According to an exemplary embodiment of the present invention, the micro-capsules are pre-mixed with 0.1-0.5% hydrophilic surface active agent evenly distributed in the concrete structure, wherein the hydrophilic surface active agent comprises one or more of alkylbenzene sulfonate, polyoxyethylene, poly-or multi-hydroxy compounds, and glycidyl.

According to an exemplary embodiment of the present invention, the micro-capsules comprise 8-30% diluent, the diluent comprising epoxy that is capable of improving liquidity of the epoxy resin and performing reaction with the epoxy resin and solidifying agent.

The diluent can improve the liquidity, and the solidifying agent can obtain a good splicing intensity.

According to an exemplary embodiment of the present invention, the solidifying agent is of a type of low-temperature reactive, comprising one or more of straight-chain aliphatic polyamine, polyamide, aliphatic polyamines, aromatic amines, modified polyamine, poly-mercaptan, urine derivatives, imidazole derivatives and organic farmers derivatives, the solidifying agent and the epoxy resin having a quality ratio of 12-35%.

It is another object of the present invention to provide a method for fabricating concrete of self-repairing of the micro cracks having polyurethane polymer micro-capsules that can effectively achieve self-repairing of the micro cracks of the concrete to solve the problem that conventional techniques cannot self diagnose and self repair. By controlling surface properties, the micro-capsules and concrete can form perfect interface.

The present invention provides a self-repairing concrete having polyurethane polymer micro-capsules and a method for fabricating concrete which is capable of self-repairing micro cracks and which comprises polyurethane polymer micro-capsules. By controlling surface properties, the micro-capsules and concrete can form perfect interface. Through optimized components portions and technique conditions, a self-repairing concrete having polyurethane polymer micro-capsules can be fabricated.

The present invention uses the micro-capsules of fine dispersibility and stability, and the micro-capsules are evenly dispersed in matrix material of concrete. The micro-capsules will not break during process of mixing and maintaining. In the course of cracking, the micro-capsules release adhesive agents to repair the concrete.

In the present invention, epoxy resin adhesive agents having components as: epoxy resins: 100, diluents: 10-30, solidifying agents: 15-35 are used. The diluents are added into the epoxy resin to decrease viscosity and increase liquidity. The modified epoxy resins are packaged with macromolecules. The solidifying agents can use directly or after micro capsuled.

The present invention also discloses methods for fabricating micro-capsules used in self-repairing concrete. Using chemical methods to fabricate the micro-capsules, a capsule core including restoration agents and epoxy resins are wrapped up thereby forming sealed capsule. The advantage of it is after the micro-capsules are formed, the capsule core is isolated from the external environment and influences of temperatures, oxygen and ultraviolet radiation of external environment are avoided. Under proper conditions, the capsule core can be released through cracks. The micro-capsules must be of proper mechanical strength and heat resistance, and the active capsule core should be of low viscosity, and small expansion coefficient and high intensity of adhesion after reactions, such that the micro-capsules can be guaranteed to be kept intact in the composite molding process, and release the capsule core under stress of micro cracks or heat.

Using polyurethane polymers to package the epoxy resins: in constant temperature water bath, 20.0g epoxy resins are added into 18.0g cyclohexanes (organic phase) having 4.35g toluene 2,4 - diisocyanates (TDI) and mixed into organic solution of uniformity. The organic solution is added into 100ml aqueous phase having 0.5g emulsifier containing sodium alginate (SA) to be fully emulsified with stirring rate at 500r/min for 5min, forming O/W emulsion. Slowly adding 100ml water having alcohols, and increasing the temperature to 70 degrees and keep stirring for 2-3h. The viscous liquid formed therein is washed by 30% ethanol to remove unreacted TDI and butyl stearate remained at surfaces. After drying for 24 hours at room temperature, micro-capsules can be obtained.

The present invention also uses polyurethane polymer materials of micro-capsules having fine dispersibility with components: polymer micro-capsules: 100, surfactants: 0.5-5.

The surfactants are added into polymer micro-capsules, and using mixture devices to perform stirring operation. In the process of self-repairing concrete materials, the micro-capsules do not united and are evenly distributed in the concrete structure. In addition, the micro-capsules can improve a liquidity of the slurry of the concrete.

The mass ratio of the self-repairing concrete is: concrete/ micro capsules/ water = 100:1-15:15 -50.

After concrete technique and cracks experiments, the self-repairing concrete is obtained. In the self-repairing concrete materials, the crack stress makes the micro-capsules rupture, and the capsule core is released to crack surfaces due to a crack capillary siphon effect and polymerization reactions are generated when contacting solidifying agents thereby forming polymer of sufficient strength to repair the cracks in order to obtain the purpose of self-repairing. Compared with an initial state and undermined state of the material, mechanical properties have significant recovery, especially the bending strength.

The present invention provides a method for fabricating concrete materials with self-repairing function as defined in claim 7. For the concrete with organic microcapsules, by adopting following process can produce self-repairing concrete materials with uniform dispersion and stable microcapsules, and the materials are not smashed in the mixing and maintaining process.

A preferred embodiment of step (5) involves putting the above mixture aside for 1 hour, scraping the concrete slurry overflowed from the mold, then laying aside for 24 hours;

A preferred embodiment of step (6) involves transferring the sample to a conservation container for 28 days.

In step (3) of the method of the present invention stirring includes first slow stirring (100-300rpm) and then rapid stirring (700-1000rpm).

In step (4) of the method of the present invention, irrigating includes gradually adding concrete slurry, vibrating and excluding bubbles until the third times of concrete slurry being added to fill in the mixing container.

In step (4) of the method of the present invention, irrigating further includes adding concrete slurry for 3 times, each time at 1/3 of total dose until the third times of concrete slurry being added to fill in the mixing container.

The beneficial effects of the present invention are that after pre-damage of 8MPa and solidify process the concrete materials having microcapsules compared to normal concrete materials have same or improved rupture strength. The micro-capsules release epoxy resins in the damage process, and chemical reactions with solidify agents are generated in the micro cracks, and the damaged structures are repaired. Therefore, the present invention using micro-capsules can produce concrete materials with self-repairing and self-diagnosis properties to protect micro cracks to expand and maintain the mechanical structures, with great economic value and environmental value.

Other novel features and advantages will become more apparent from the following detailed description when taken in conjunction with the accompanying drawings.

### DETAILED DESCRIPTION OF PREFERRED EMBODIMENTS

Embodiment 1: Diluent is adopted to improve a liquidity and an adhesive performance of an epoxy resin and a repair efficiency of self-repairing of a concrete of composite materials is increased. 20% 2-heptadecyl-1H-imidazole solidifying agent is added to the epoxy adhesive E-51; then 20% N-butyl glycidyl ether (BGE) is added, the viscosity is decreased from 8200mPa·s to 200mPa·s and the liquidity of the epoxy adhesive is improved, helping the capillary siphon effect to occur; a tensile strength change is from 14.0MPa up to 17.6MPa, modulus from 223.3MPa to 334.0MPa, proving that the BGE help improve the mechanical performance of the epoxy resin. Analysis of FTIR shows that the diluent involves a cross-reaction of the epoxy resin and the solidifying agent.

Embodiment 2 (Reference): With polyurethane as the cyst wall, capsule core material such as the repair agent and epoxy resin are wrapped to form a sealed cyst membrane, which are used for fabricating micro-capsules of self-repairing concrete. 10 grams of carbamide are dissolved in 20.0 grams of 37% formaldehyde, and the pH value is adjusted to 8.5 by triethanolamine. In the mixing state and at 70°C constant temperature conditions, with one hour of reaction, prepolymer is obtained. 80-160 ml distilled water are added into 14.0 grams of epoxy resin of embodiment 1, with 20 minutes of violent stirring, W/O emulsion with high stability is obtained. Within two hours period, the pH value is adjusted to 4-5 with 2% sulphuric acid. Under conditions of 300-1200 rpm mixing speed and 50°C -80°C reaction temperature, about 2-3 hours reaction are undertaken. After cooling the product is washed with distilled water, and dried, and white micro-capsule material is obtained. The micro-capsule has ball shape, with an average diameter of 120 microns and a capsule wall thickness of 3.5 microns.

Embodiment 3: Surface active agent is adopted to help improve the liquidity and dispersity of polymer material micro-capsules used in fabricating self-repairing concrete. 1.5 grams of dodecyl benzene sulphonic acid are added to 100 grams of the epoxy resin material having polymer micro-capsules, after 30 minutes of stirring, powdery substance with good liquidity and dispersity are obtained.

Embodiment 4: Polyurethane polymer micro-capsules material is used to prepare sample of concrete having self-repairing function. 38.0 grams water is added with 2.0 grams polyurethane micro-capsules, stirring until fully dispersed. The water is poured into a mixing container and 100 grams cement are added therein. Stirring, vibrating, and work piece irrigating are conducted. After one hour of being put aside, the mold is formed. After mold overflow of concrete slurry has been scraped, the mold is put aside for 24 hours. Then after the mold has been removed the sample is transferred into the conservation container for 28 days.

Testing of a strength of flexure and analysis of a pattern of fracture. During the process of fracture, the organic micro-capsules are destructed by stress, and a small portion thereof are separated at interface of the organic micro-capsules and the concrete. Organic micro-capsules and concrete can form a good interface. By using concrete having organic micro-capsules material, an original state compared to a destructed state, the strength of flexure is changed little or increased by a little, and the mechanic performance has a great restoration. This proves that the organic micro-capsule structure has the function of repairing for the cement structure. In the self-repairing concrete structure, stress causes the micro-capsules to fracture, and the capsule cores released are capable of flowing to the fracture surface due to an effect of capillary siphon, thus the capsule cores contact the solidifying agent and have polymerization reaction therein, forming repairing fracture surface of enough high strength, such that the purpose of repairing the concrete is achieved.

Embodiment 5: Technology of fabricating concrete material with self-repairing function by using polyurethane polymer micro-capsules. 38.0 grams of water are weighed, and 5.0g of micro-capsules are added, then the mixture is stirred until the micro-capsules being fully dispersed. The mixture is put into a mixing container, and 60.0g of cement, 20.0g of sandstone, 10g of phosphorous slag powder and 10g of coal ash are added. Then operations of stirring, vibrating, and work piece irrigating are performed. After one hour of being put aside, the mold is formed. After mold overflow of concrete slurry has been scraped, the mold is put aside for 24 hours. Then after the mold has been removed the sample is transferred into the conservation container for 28 days.

Embodiment 6: Method for fabricating self-repairing concrete using polyurethane polymer micro-capsules.
(1) Weighing enough dose of water, adding in a proper portion of polyurethane polymer micro-capsules, then stirring until fully dispersed;
(2) Poring the above mixture to a mixing container, adding in corresponding dose of concrete;
(3) Slowly stirring the concrete (300 rpm), and then faster stirring (800 rpm);
(4) Gradually adding concrete slurry, each time at 1/3 (one third) of total dose, vibrating and excluding bubbles until the third times of concrete slurry being added to fill in the mixing container.
(5) Putting the above mixture aside for one hour, scraping the concrete slurry overflowed from the mold, then laying aside for 24 hours;
(6) Removing the mold and then transferring the sample to conservation container for 28 days.

During the process of mixing, solidifying and curing of the concrete material, the micro-capsules have no fracture. The self-repairing concrete using polymer micro-capsules has good process operability, self-repairing repeatability, and industrial application possibility.

It is to be understood, however, that even though numerous characteristics and advantages of exemplary and preferred embodiments have been set out in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A self-repairing concrete comprising:
concrete, micro-capsules and water being mixed together, wherein the micro-capsules comprise a capsule wall and an adhesive material of a capsule core, the capsule wall being made from polyurethane polymer;
wherein a mass ratio-of the concrete is: concrete / micro-capsules / water = 100 : 1-15 : 15-50,
wherein the adhesive is a single-component adhesive selected from the group consisting of single-component polyurethane adhesives, silicone anaerobic adhesives, acrylic adhesives and neoprene adhesives, or is a multi-component epoxy adhesive,
wherein the polymer material of the capsule wall and the adhesive material of the capsule core of the micro-capsule has a mass ratio of 100 : 40-80,
wherein the micro-capsules are ball-shaped with a diameter of 10-500 microns, and
wherein the thickness of said capsule wall is 1-10 microns.

2. The self-repairing concrete as claimed in claim 1, wherein the multi-component epoxy adhesive consists of one or more of bisphenol A type epoxy resin, bisphenol F type epoxy resin, bisphenol S type epoxy resin, resorcinol-type epoxy resin, silicone modified bisphenol A type epoxy resin or organic titanium modified bisphenol A type epoxy resin.

3. The self-repairing concrete as claimed in claim 1 or 2, wherein the micro-capsules are pre-mixed with 0.1-0.5% hydrophilic surface active agent evenly distributed in the concrete structure, wherein the hydrophilic surface active agent comprises one or more of alkylbenzene sulfonate, polyoxyethylene, poly- or multi-hydroxy compounds, and glycidyl compound.

4. The self-repairing concrete as claimed in claim 3, wherein the micro-capsules further comprises 8-25% diluent, the diluent comprising a solidifying agent capable of chemically reacting with epoxy resin and improving liquidity of said epoxy resin.

5. The self-repairing concrete as claimed in claim 4, wherein the solidifying agent, which is a low-temperature reactive type, comprises one or more of straight-chain aliphatic polyamines, polyamides, aliphatic polyamines, aromatic amines, modified polyamines, poly-mercaptans, urea derivatives, imidazole derivatives and organic farmers derivatives, the solidifying agent and the epoxy resin having a mass ratio of 12-35%.

6. A method for fabricating a self-repairing concrete, comprising the steps of:
(1) mixing enough water with a proper portion of micro-capsules until said micro-capsules are fully dispersed into said water,
wherein said micro-capsules comprise a capsule wall and adhesive material of a capsule core, said capsule wall being made from polyurethane polymer, wherein a mass ratio of the concrete is: concrete / micro-capsules / water = 100 : 1-15 : 15 -50,
wherein the adhesive is a single-component adhesive selected from the group consisting of single-component polyurethane adhesives, silicone anaerobic adhesives, acrylic adhesives and neoprene adhesives, or is a multi-component epoxy adhesive,
wherein the polymer material of the capsule wall and the adhesive material of the capsule core of the micro-capsule has a mass ratio of 100 : 40-80, wherein the micro-capsules are ball-shaped with a diameter of 10-500 microns, and
wherein the thickness of said capsule wall is 1-10 microns;
(2) placing a mixture of said water and said micro-capsules in a mixing container and adding a corresponding dose of cement into said mixture;
(3) slowly stirring said mixture with cement and then faster stirring said mixture with cement to form a concrete slurry; and
(4) gradually adding said concrete slurry into a mixing container and vibrating said concrete slurry to remove bubbles in said concrete slurry in said mixing container to form said self-repairing concrete, wherein said concrete slurry is added into said mixing container in parts that 1/3 of said concrete slurry is added into said mixing container at each time until all of said concrete slurry is filled in said mixing container.

7. A method for fabricating a self-repairing concrete, comprising the steps of:
(1) mixing enough water with a proper portion of micro-capsules until said micro-capsules are fully dispersed into said water,
wherein said micro-capsules comprise a capsule wall and adhesive material of the capsule core, said capsule wall being made from polyurethane polymer, wherein a mass ratio of the concrete is: concrete / micro-capsules / water = 100 : 1-15 : 15 -50,
wherein the adhesive is a single-component adhesive selected from the group consisting of single-component polyurethane adhesives, silicone anaerobic adhesives, acrylic adhesives and neoprene adhesives, or is a multi-component epoxy adhesive,
wherein the polymer material of the capsule wall and the adhesive material of the capsule core of the micro-capsule has a mass ratio of 100 : 40-80, wherein said micro-capsules are ball-shaped with a diameter of 10-500 microns, and
wherein the thickness of said capsule wall is 1-10 microns;
(2) placing a mixture of said water and said micro-capsules in a mixing container and adding a corresponding dose of cement into said mixture;
(3) slowly stirring said mixture with cement and then faster stirring said mixture with cement to form a concrete slurry;
(4) vibrating said concrete slurry to remove bubbles in said concrete slurry and forming said concrete slurry into work pieces in molds;
(5) placing said work pieces aside for 1-2 hours, scraping excessive of said concrete slurry in said molds, and then placing said work pieces for another 21-26 hours; and
(6) removing said work pieces from said molds and placing said work pieces in a concrete conservation container for 25-31 days to form said self-repairing concrete.

## Patentansprüche

1. Ein selbstreparierender Beton, umfassend:
miteinander vermischten Beton, Mikrokapseln und Wasser, wobei die Mikrokapseln eine Kapselwand und ein Klebstoffmaterial eines Kapselkerns umfassen, wobei die Kapselwand aus Polyurethanpolymer ist,
wobei ein Massenverhältnis des Betons: Beton / Mikrokapseln / Wasser gleich 100 : 1-15 : 15-50 ist,
wobei der Klebstoff ein Einkomponenten-Klebstoff, ausgewählt aus der Gruppe bestehend aus Einkomponenten-Polyurethanklebstoffen, anaerobischen Siliconklebstoffen, Acrylklebstoffen und Neonprenklebstoffen, oder ein Mehrkomponenten-Epoxidklebstoff ist,
wobei das Polymermaterial der Kapselwand und das Klebstoffmaterial des Kapselkerns der Mikrokapsel ein Massenverhältnis von 100 : 40-80 aufweisen,
wobei die Mikrokapseln kugelförmig sind mit einem Durchmesser von 10-500 Mikron und wobei die Dicke der Kapselwand 1-10 Mikron beträgt.

2. Der selbstreparierende Beton gemäß Anspruch 1, wobei der Mehrkomponenten-Epoxidklebstoff aus einem oder mehreren von Epoxidharzen vom Bisphenol-A-Typ, Epoxidharzen vom Bisphenol-F-Typ, Epoxidharzen vom Bisphenol-S-Typ, Epoxidharzen vom Resorcinol-Typ, Silikon-modifizierten Epoxidharzen vom Bisphenol-A-Typ oder Epoxidharzen vom Bisphenol-A-Typ, die mit organischem Titan modifiziert sind, besteht.

3. Der selbstreparierende Beton gemäß Anspruch 1 oder 2, wobei die Mikrokapseln mit 0,1-0,5 % hydrophilem grenzflächenaktiven Mittel vorgemischt und gleichmäßig in der Betonstruktur verteilt sind, wobei das hydrophile grenzflächenaktive Mittel eines oder
mehrere von Alkylbenzolsulfonat, Polyoxyethylen, Poly- oder Multihydroxyverbindungen und Glycidylverbindungen umfasst.

4. Der selbstreparierende Beton gemäß Anspruch 3, wobei die Mikrokapseln darüber hinaus 8-25 % Verdünnungsmittel umfassen, wobei das Verdünnungsmittel ein Festigungsmittel umfasst, das in der Lage ist, mit Epoxidharz chemisch zu reagieren und die Fließfähigkeit des Epoxidharzes zu verbessern.

5. Der selbstreparierende Beton gemäß Anspruch 4, wobei das Festigungsmittel, das vom Niedrigtemperatur-Reaktiv-Typ ist, eines oder mehrere von geradkettigen aliphatischen Polyaminen, Polyamiden, aliphatischen Polyaminen, aromatischen Aminen, modifizierten Polyaminen, Polymercaptanen, Harnstoffderivaten, Imidazolderivaten und organischen landwirtschaftlichen Derivaten umfasst, wobei das Festigungsmittel und das Epoxidharz ein Massenverhältnis von 12-35 % aufweisen.

6. Ein Verfahren zur Herstellung eines selbstreparierenden Betons, umfassend die Schritte:
(1) Mischen von genügend Wasser mit einer angemessenen Menge von Mikrokapseln, bis die Mikrokapseln vollständig im Wasser dispergiert sind,
wobei die Mikrokapseln eine Kapselwand und ein Klebstoffmaterial eines Kapselkerns umfassen, wobei die Kapselwand aus Polyurethanpolymer ist,
wobei ein Massenverhältnis des Betons Beton / Mikrokapseln / Wasser gleich 100 : 1-15 : 15-50 ist,
wobei der Klebstoff ein Einkomponenten-Klebstoff, ausgewählt aus der Gruppe bestehend aus Einkomponenten-Polyurethanklebstoffen, anaerobischen Silikonklebstoffen, Acrylklebstoffen und Neoprenklebstoffen, oder ein Mehrkomponenten-Epoxidklebstoff ist,
wobei das Polymermaterial der Kapselwand und das Klebstoffmaterial des Kapselkerns der Mikrokapsel ein Massenverhältnis von 100 : 40-80 aufweisen, wobei die Mikrokapseln kugelförmig mit einem Durchmesser von 10-500 Mikron sind, und
wobei die Dicke der Kapselwand 1-10 Mikron beträgt,
(2) Einbringen eines Gemischs aus Wassers und der Mikrokapseln in einen Mischbehälter und Zugabe einer entsprechenden Dosis von Zement zu dem Gemisch,
(3) langsames Rühren des Gemischs mit Zement und dann schnelleres Rühren des Gemischs mit Zement, um einen Betonslurry zu bilden, und
(4) allmähliche Zugabe des Betonslurry in einen Mischbehälter und Vibrieren des Betonslurry, um Blasen in dem Betonslurry in dem Mischbehälter zu entfernen, um den selbstreparierenden Beton zu bilden, wobei der Betonslurry in Portionen in den Mischbehälter zugegeben wird, so dass jedes Mal 1/3 des Betonslurry in den Mischbehälter zugegeben wird, bis der gesamte Betonslurry in den Mischbehälter gefüllt ist.

7. Ein Verfahren zur Herstellung eines selbstreparierenden Betons, umfassend die Schritte:
(1) Mischen von genügend Wasser mit einer angemessenen Menge von Mikrokapseln, bis die Mikrokapseln vollständig im Wasser dispergiert sind,
wobei die Mikrokapseln eine Kapselwand und ein Klebstoffmaterial eines Kapselkerns umfassen, wobei die Kapselwand aus Polyurethanpolymer gemacht ist, wobei ein Massenverhältnis des Betons: Beton / Mikrokapseln / Wasser gleich 100 : 1-15 : 15-50 ist,
wobei der Klebstoff ein Einkomponenten-Klebstoff, ausgewählt aus der Gruppe bestehend aus Einkomponenten-Polyurethanklebstoffen, anaerobischen Silikonklebstoffen, Acrylklebstoffen und Neoprenklebstoffen, oder ein Mehrkomponenten-Epoxidklebstoff ist,
wobei das Polymermaterial der Kapselwand und das Polymermaterial des Kapselkerns der Mikrokapsel ein Massenverhältnis von 100 : 40-80 aufweisen, wobei die Mikrokapseln kugelförmig mit einem Durchmesser von 10-500 Mikron sind, und
wobei die Dicke der Kapselwand 1-10 Mikron beträgt;
(2) Einbringen eines Gemisches aus Wassers und der Mikrokapseln in einen Mischbehälter und Zugabe einer entsprechenden Dosis von Zement zu dem Gemisch;
(3) langsames Rühren des Gemischs mit Zement und dann schnelleres Rühren des Gemischs mit Zement, um einen Betonslurry zu bilden;
(4) Vibrieren des Betonslurry, um Blasen in dem Betonslurry zu entfernen und Formen des Betonslurry zu Werkstücken in Formen;
(5) Ruhen lassen der Werkstücke für 1-2 Stunden, Abschaben des Überschusses an Betonslurry in den Formen, und dann Ruhen lassen der Werkstücke für weitere 21-26 Stunden; und
(6) Entnahme der Werkstücke aus den Formen und Einbringen der Werkstücke in einen Behälter zur Aufbewahrung des Betons für 25 bis 31 Tage, um den selbstreparierenden Beton zu bilden.

## Revendications

1. Béton auto-réparable comprenant :
du béton, des microcapsules et de l'eau mélangés ensemble, dans lequel les microcapsules comprennent une paroi de capsule et une matière adhésive d'un noyau de capsule, la paroi de capsule étant faite en polymère de polyuréthane ;
dans lequel un rapport en poids du béton est : béton / microcapsules / eau = 100:1 à 15:15 à 50,
dans lequel l'adhésif est un adhésif à un composant unique choisi dans le groupe constitué par les adhésifs de polyuréthane à un composant unique, les adhésifs anaérobies de silicone, les adhésifs acryliques et les adhésifs de néoprène, ou est un adhésif époxy à plusieurs composants,
dans lequel le matériau polymère de la paroi de capsule et de la matière adhésive du noyau de capsule de la microcapsule a un rapport en poids de 100:40 à 80,
dans lequel les microcapsules ont la forme de billes ayant un diamètre de 10 à 500 microns, et dans lequel l'épaisseur de ladite paroi de capsule est de 1 à 10 microns.

2. Béton auto-réparable selon la revendication 1, dans lequel l'adhésif époxy à plusieurs composants se compose d'une ou plusieurs résine époxy de type bisphénol A, résine époxy de type bisphénol F, résine époxy de type bisphénol S, résine époxy de type résorcinol, résine époxy de type bisphénol A modifiée par une silicone ou résine époxy de type bisphénol A modifiée par du titane organique.

3. Béton autoréparable selon la revendication 1 ou 2, dans lequel les microcapsules sont prémélangées avec de 0,1 à 0,5 % d'agent tensioactif hydrophile et sont distribuées de manière homogène dans la structure en béton, dans lequel ledit agent tensioactif hydrophile comprend un ou plusieurs d'un sulfonate d'alkylbenzène, d'un polyoxyéthylène, de composés poly ou multi-hydroxy et d'un composé glycidylique.

4. Béton autoréparable selon la revendication 3, dans lequel lesdites microcapsules comprennent en outre de 8 à 25 % de diluant, le diluant comprenant un agent de solidification capable de réagir chimiquement avec la résine époxy et d'améliorer le caractère liquide de ladite résine époxy.

5. Béton autoréparable selon la revendication 4, dans lequel l'agent de solidification, qui est de type réactif à basse température, comprend un ou plusieurs de polyamines aliphatiques à chaîne linéaire, polyamides, polyamines aliphatiques, amines aromatiques, polyamines modifiées, polymercaptans, dérivés de l'urée, dérivés de l'imidazole et dérivés de l'agriculture biologique, l'agent de solidification et la résine époxy ayant un rapport en poids de 12 à 35 %.

6. Méthode de fabrication d'un béton autoréparable comprenant les étapes consistant à :
(1) mélanger suffisamment d'eau avec une partie appropriée de microcapsules jusqu'à ce que lesdites microcapsules soient totalement dispersées dans ladite eau,
dans lequel lesdites microcapsules comprennent une paroi de capsule et une matière adhésive d'un noyau de capsule, ladite paroi de capsule étant faite en polymère de polyuréthane,
dans lequel un rapport en poids du béton est : béton / microcapsules / eau = 100:1 à 15:15 à 50,
dans lequel l'adhésif est un adhésif à un composant unique choisi dans le groupe constitué par les adhésifs de polyuréthane à un composant unique, les adhésifs anaérobies de silicone, les adhésifs acryliques et les adhésifs de néoprène, ou est un adhésif époxy à plusieurs composants,
dans lequel le matériau polymère de la paroi de capsule et de la matière adhésive du noyau de capsule de la microcapsule a un rapport en poids de 100:40 à 80,
dans lequel les microcapsules ont la forme de billes ayant un diamètre de 10 à 500 microns, et
dans lequel l'épaisseur de ladite paroi de capsule est de 1 à 10 microns ;
(2) placer un mélange de ladite eau et desdites microcapsules dans un récipient de mélange et ajouter une dose correspondante de ciment dans ledit mélange ;
(3) agiter lentement ledit mélange avec le ciment et ensuite agiter plus rapidement ledit mélange avec le ciment pour former une suspension de béton ; et
(4) ajouter progressivement ladite suspension de béton dans un récipient de mélange et faire vibrer ladite suspension de béton pour éliminer les bulles dans ladite suspension de béton dans ledit récipient de mélange afin de former ledit béton auto-réparable, dans lequel ladite suspension de béton est ajoutée dans ledit récipient de mélange par portions de sorte que 1/3 de ladite suspension de béton soit ajouté dans ledit récipient de mélange à chaque fois jusqu'à ce que toute ladite suspension de béton soit chargée dans ledit récipient de mélange.

7. Méthode de fabrication d'un béton autoréparable comprenant les étapes consistant à :
(1) mélanger suffisamment d'eau avec une partie appropriée de microcapsules jusqu'à ce que lesdites microcapsules soient totalement dispersées dans ladite eau,
dans lequel lesdites microcapsules comprennent une paroi de capsule et une matière adhésive d'un noyau de capsule, ladite paroi de capsule étant en polymère de polyuréthane,
dans lequel un rapport en poids du béton est : béton / microcapsules / eau = 100:1 à 15:15 à 50,
dans lequel l'adhésif est un adhésif à un composant unique choisi dans le groupe constitué par les adhésifs de polyuréthane à un composant unique, les adhésifs anaérobies de silicone, les adhésifs acryliques et les adhésifs de néoprène, ou est un adhésif époxy à plusieurs composants,
dans lequel le matériau polymère de la paroi de capsule et de la matière adhésive du noyau de capsule de la microcapsule a un rapport en poids de 100:40 à 80,
dans lequel les microcapsules ont la forme de billes ayant un diamètre de 10 à 500 microns, et
dans lequel l'épaisseur de ladite paroi de capsule est de 1 à 10 microns ;
(2) placer un mélange de ladite eau et desdites microcapsules dans un récipient de mélange et ajouter une dose correspondante de ciment dans ledit mélange ;
(3) agiter lentement ledit mélange avec le ciment et ensuite agiter plus rapidement ledit mélange avec le ciment pour former une suspension de béton ;
(4) faire vibrer ladite suspension de béton pour éliminer les bulles de ladite suspension de béton et former ladite suspension de béton sous forme de pièces à usiner dans des moules ;
(5) laisser de côté lesdites pièces à usiner ci-dessus pendant 1 à 2 heures, racler l'excès de ladite suspension de béton desdits moules, puis mettre de côté lesdites pièces à usiner pendant d'autres 21 à 26 heures ; et
(6) retirer lesdites pièces à usiner desdits moules et placer lesdites pièces à usiner dans un récipient de conservation de béton pendant 25 à 31 jours afin de former ledit béton autoréparable.
